(19) Europäisches Patentamt
European Patent Office
Office européen des brevets

(11) EP 3 779 032 A1

(12) EUROPEAN PATENT APPLICATION
published in accordance with Art. 153(4) EPC

(43) Date of publication:
17.02.2021 Bulletin 2021/07

(51) Int Cl.:
D06N 3/14 (2006.01)　　　D06M 15/564 (2006.01)

(21) Application number: 19784452.5

(22) Date of filing: 26.02.2019

(86) International application number:
PCT/JP2019/007200

(87) International publication number:
WO 2019/198357 (17.10.2019 Gazette 2019/42)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 12.04.2018 JP 2018076570
12.04.2018 JP 2018076571

(71) Applicant: Toray Industries, Inc.
Tokyo, 103-8666 (JP)

(72) Inventors:
• KOIDE, Gen
Otsu-shi, Shiga 520-8558 (JP)
• SHIKURI, Ryuji
Anpachi-gun, Gifu 503-2395 (JP)
• NISHIMURA, Makoto
Otsu-shi, Shiga 520-8558 (JP)

(74) Representative: Mewburn Ellis LLP
Aurora Building
Counterslip
Bristol BS1 6BX (GB)

(54) SHEET-SHAPED ARTICLE AND METHOD FOR PRODUCING SAME

(57) This sheet-shaped article comprises a polymer elastic body and a nonwoven fabric obtained from ultrafine fibers having an average single-fiber diameter of 0.1 to 10 $\mu$m. The sheet-shaped article is characterized in that the polymer elastic body is a polyurethane resin obtained using, as the reaction components, the following: a polycarbonate diol containing structural units derived from a $C_{8-20}$ alkane diol; an organic diisocyanate; and a chain extender. The sheet-shaped article is also characterized in that the bending and crease recovery rate thereof is 80 to 100%.

EP 3 779 032 A1

**Description**

TECHNICAL FIELD

The present invention relates to a sheet-shaped article and a production method therefor and particularly to a preferably napped sheet-shaped article and a production method therefor.

BACKGROUND ART

Sheet-shaped articles primarily including polyurethane and a fibrous substrate such as a nonwoven fabric have excellent features not shared with natural leather, and are thus widely utilized for various purposes such as synthetic leather. Sheet-shaped articles using a polyester-based fibrous substrate, in particular, have excellent light resistance, so that their usage as clothing, chair covering, and automobile interior material has increasingly been extended.

For production of such a sheet-shaped article, a combination of steps has been commonly adopted, including: impregnating a fibrous substrate in a polyurethane-containing organic solvent solution; and then soaking the resulting fibrous substrate in an aqueous solution containing water or an organic solvent in which polyurethane is not dissolved, thereby subjecting the polyurethane to wet coagulation. In this case, a water-miscible organic solvent such as N,N-dimethylformamide is used as the organic solvent as a solvent for polyurethane. Unfortunately, generally speaking, organic solvents are highly harmful to the environment. Thus, when such a sheet-shaped article is produced, a technique without using any organic solvent has been strongly sought.

As a specific solution, a method has been considered in which a water-dispersible polyurethane prepared by dispersing a polyurethane resin into water is used as an alternative for the conventional organic solvent-miscible polyurethane. To date, to obtain a sheet-shaped article with flexible texture by using a water-dispersible polyurethane, a method has been disclosed in which a polyurethane molecule is made a flexible composition by using, as the water-dispersible polyurethane, for instance, polycarbonate diol containing structural units derived from 1,10-decanediol (see Patent Document 1).

Alternatively, a method has been disclosed, including: imparting a highly saponified polyvinyl alcohol (PVA) to a nonwoven fabric composed of sea-island fibers; imparting a water-dispersible polyurethane after removal of the sea component; and finally removing the PVA so as to form a gap between the water-dispersible polyurethane and the fibers, thereby decreasing retention force between interlaced regions (see Patent Document 2).

PRIOR ART DOCUMENTS

PATENT DOCUMENTS

Patent Document 1: Japanese Patent Laid-open Publication No. 2017-119755
Patent Document 2: WO 2014/084253

SUMMARY OF THE INVENTION

PROBLEMS TO BE SOLVED BY THE INVENTION

Unfortunately, any sheet-shaped article is likely to have a hard texture, the article produced by impregnating a fibrous substrate in a water-dispersible polyurethane dispersion in which a water-dispersible polyurethane has been dispersed in liquid and then coagulating the polyurethane. One of the major reasons lies in a difference in the form of coagulation between the case of using an organic solvent-miscible polyurethane and the case of using a water-dispersible polyurethane.

The coagulated form of the organic solvent-miscible polyurethane liquid is a coagulated form obtained by replacing the solvent for a polyurethane molecule, which has been dissolved in the organic solvent, by water, and is commonly obtained by using what is called a wet coagulation process. When the structure of this polyurethane after coagulation following formation of a film was observed, the film of the organic solvent-miscible polyurethane coagulated by the wet coagulation process was a low-density porous film. This low-density porous structure causes the contact area between fibers and the polyurethane at the time of coagulation to be reduced even in the case where the polyurethane is impregnated in a fibrous substrate. This should produce a soft sheet-shaped article.

By contrast, for a water-dispersible polyurethane, widely used is what is called a dry coagulation process including disintegrating the hydration state of a water-dispersible polyurethane dispersion primarily by heating to cause polyurethane emulsions to be aggregated to one another for coagulation. When the structure of this polyurethane after coagulation following formation of a film was observed, the film of the water-dispersible polyurethane coagulated by the dry coagulation process was a high-density nonporous film. This makes dense the adhesion between a fibrous substrate and the polyurethane, thereby strongly retaining interlaced regions of fibers. This should make the texture rigid.

In the method disclosed in Patent Document 1, the hardness of texture can be improved to obtain a flexible texture and a feeling of resilience as a touch sensation. However, the water-dispersible polyurethane is too flexible for general purposes. Here, how easy a crease recovers when a sheet-shaped article is folded is not fully satisfactory.

Meanwhile, in the method disclosed in Patent Document 2, the structure of a sheet-shaped article can cause a flexible texture to be expressed regardless of whether it is the water-dispersible polyurethane or not. However, regarding the crease recovery occurring at the time of folding a sheet-shaped article, the retention force between fibers is low in the case of using a water-dispersible polyurethane. Thus, how easy a crease recovers is not fully satisfactory.

Here, in view of the above BACKGROUND ART, the purpose of the invention is to provide a sheet-shaped article and a production method therefor such that both a flexible texture and favorable crease recovery are established.

SOLUTIONS TO THE PROBLEMS

To achieve the above goal, the present inventors have conducted intensive research and, as a result, have found that a water-dispersible polyurethane obtained by including, as reaction components, a specific polycarbonate diol, an organic diisocyanate, and a chain extender can be used to not only produce a sheet-shaped article while the environment is considered, but also yield the sheet-shaped article having a better texture and crease recovery than those of conventional sheet-shaped articles. In this way, the invention has been completed.

Specifically, the invention addresses the above problems, and this sheet-shaped article includes a polymer elastic body and a nonwoven fabric obtained from ultrafine fibers having an average single-fiber diameter of 0.1 to 10 $\mu$m, wherein the polymer elastic body is a polyurethane resin obtained using, as reaction components, the following: a polycarbonate diol containing a structural unit derived from a $C_{8-20}$ alkane diol; an organic diisocyanate; and a chain extender, and a bending and crease recovery rate of the sheet-shaped article is 80 to 100%.

According to the sheet-shaped article according to a preferable embodiment of the invention, the polyurethane resin further includes, as a reaction component, a polycarbonate diol containing a structural unit derived from a $C_{4-6}$ alkane diol.

In addition, a method for producing a sheet-shaped article according to the invention includes the steps of: imparting a water-dispersible polyurethane obtained by reacting a polycarbonate diol containing a structural unit derived from a $C_{8-20}$ alkane diol, an organic diisocyanate, and a chain extender to a fibrous substrate to which polyvinyl alcohol has been imparted at 0.1 mass% to 50 mass% per fiber mass and which has, as a main constituent, ultrafine fibers with an average single-fiber diameter of 0.1 $\mu$m to 10 $\mu$m; and then removing the polyvinyl alcohol from the fibrous substrate.

In the method for producing a sheet-shaped article according to a preferable embodiment of the invention, the water-dispersible polyurethane is coagulated at a temperature of 55°C to 80°C.

In the method for producing a sheet-shaped article according to a preferable embodiment of the invention, the polyvinyl alcohol has a saponification degree of 98% or higher.

In the method for producing a sheet-shaped article according to a preferable embodiment of the invention, the water-dispersible polyurethane further includes a heat-sensitive coagulant.

EFFECTS OF THE INVENTION

The invention makes it possible, through an environment-oriented production method without using any organic solvent during the production step, to obtain a sheet-shaped article having both a flexible texture and favorable crease recovery as an important function when used in practice.

EMBODIMENTS OF THE INVENTION

A sheet-shaped article of the invention includes a polymer elastic body and a nonwoven fabric obtained from ultrafine fibers having an average single-fiber diameter of 0.1 $\mu$m to 10 $\mu$m, in which the polymer elastic body is a polyurethane resin obtained using, as reaction components, the following: a polycarbonate diol containing a structural unit derived from a $C_{8-20}$ alkane diol; an organic diisocyanate; and a chain extender, and the bending and crease recovery rate of the sheet-shaped article is 80 to 100%. Hereinafter, the constituting elements will be described in detail. The invention, however, is not limited to the below-described scope as long as the scope is not beyond its spirit.

[Ultrafine Fibers]

For ultrafine fibers used in the invention, it is possible to use a polyester-based resin obtained from a dicarboxylic acid and/or an ester-forming derivative thereof and a diol, namely a resin such as polyethylene terephthalate, polybutylene terephthalate, or polytrimethylene terephthalate.

Examples of the dicarboxylic acid and/or ester-forming derivative thereof used in the polyester-based resin include terephthalic acid, isophthalic acid, 2,6-naphthalenedicarboxylic acid, diphenyl-4,4'-dicarboxylic acid, or an ester-forming derivative thereof. Note that the ester-forming derivative herein refers to a lower alkyl ester, acid anhydride, or acyl chloride of the above dicarboxylic acid. Specifically, for instance, a methyl ester, ethyl ester, or hydroxyethyl ester is preferably used. Examples of the dicarboxylic acid and/or ester-forming derivative thereof according to a preferable embodiment of the invention include terephthalic acid and/or a dimethyl ester thereof.

Examples of a diol used in the polyester-based resin include ethylene glycol, 1,3-propanediol, 1,4-butanediol, or cyclohexanedimethanol. Among them, preferred is ethylene glycol.

In addition, in the polyester-based resin, it is possible to include, without impairing the effects of the invention, a commonly used additive(s) such as metal oxide or pigment particles, a fire retardant, and/or an antistatic agent.

The cross-sectional shape of ultrafine fiber may be a round cross section, and it is possible to adopt a modified cross section shaped like an ellipse, a squamous form, a polygon such as a triangle, a sector, or a cross.

It is important that ultrafine fibers in the invention have an average single-fiber diameter of 0.1 $\mu$m to 10 $\mu$m. When the average single-fiber diameter of ultrafine fibers is 10 $\mu$m or less, preferably 7 $\mu$m or less, and more preferably 5 $\mu$m or less, the sheet-shaped article can be made more flexible and its raised nap quality can be improved. Then, when the average single-fiber diameter of ultrafine fibers is 0.1 $\mu$m or larger, preferably 0.3 $\mu$m or larger, and more preferably 0.7 $\mu$m or larger, it is possible to produce a sheet-shaped article with excellent post-dyeing coloring. In addition, when napped by buffing, bundled ultrafine fibers can be easy to disperse and handle.

As used herein, the average single-fiber diameter can be measured by the following protocol.

Specifically,

(1) Each cross section of the resulting sheet-shaped article cut in the thickness direction is observed under a scanning electron microscope (SEM).
(2) The fiber diameters of any 50 ultrafine fibers in the observation plane with respect to 3 sites on each ultrafine fiber cross section are measured. Provided that in the case of utilizing ultrafine fibers with a modified cross section, the cross-section area of single fiber is measured and the diameter of a circle corresponding to the cross-section area is estimated using the following equation. The resulting diameter is defined as the single-fiber diameter of the single-fiber.

$$- \text{Single fiber diameter } (\mu m) = (4 \times (\text{Cross-section area } (\mu m^2) \text{ of single fiber})/\pi)^{1/2}.$$

(3) The total of the diameters obtained at 150 points is averaged and the arithmetic mean ($\mu$m) is round off to the first decimal place.

[Nonwoven Fabric]

A nonwoven fabric used in the invention includes the above ultrafine fibers. Note that it is acceptable that the nonwoven fabric is mixed with a different kind of raw material ultrafine fiber.

As a form of the above nonwoven fabric, it is possible to use a nonwoven fabric in which the above ultrafine fibers are interlaced or a nonwoven fabric in which fiber bundles of ultrafine fibers are interlaced. It is preferable to use, from the viewpoints of the strength and texture of a sheet-shaped article, a nonwoven fabric in which fiber bundles of ultrafine fibers are interlaced. From the viewpoints of flexibility and texture, it is particularly preferable to preferably use a nonwoven fabric in which ultrafine fibers constituting fiber bundles of ultrafine fibers are appropriately apart from one another and are thus spaced. As such, the nonwoven fabric, in which fiber bundles of ultrafine fibers are interlaced, may be produced by beforehand interlacing ultrafine fiber-generating fibers and then generating ultrafine fibers. In addition, the nonwoven fabric, in which ultrafine fibers constituting fiber bundles of ultrafine fibers are appropriately apart from one another and are thus spaced, may be produced by using sea-island composite fibers in which a sea component may be removed to make a space between island components.

As the above nonwoven fabric, any of a short-fiber nonwoven fabric or a long-fiber nonwoven fabric can be used. However, it is more preferable to use a short-fiber nonwoven fabric from the viewpoints of the texture and quality of a sheet-shaped article.

In a preferable embodiment, the fiber length of short fiber in the case of using a short fiber nonwoven fabric ranges from 25 mm to 90 mm. When the fiber length is 25 mm or longer, more preferably 35 mm or longer, and still more preferably 40 mm or longer, a sheet-shaped article with excellent wear resistance can be obtained by interlacing. In addition, when the fiber length is 90 mm or shorter, more preferably 80 mm or shorter, and still more preferably 70 mm or shorter, a sheet-shaped article with better texture and quality can be obtained.

To increase the strength, the inside of a nonwoven fabric in the invention may have a woven fabric or knitted fabric inserted, layered, or lined. The fibers constituting such a woven fabric or knitted fabric may have an average single-fiber diameter of 0.3 $\mu$m to 10 $\mu$m. This case is more preferable because damage during needle punching is reduced and the strength can thus be maintained.

As the fibers constituting the woven fabric or knitted fabric, it is possible to use a polyester such as polyethylene terephthalate, polybutylene terephthalate, polytrimethylene terephthalate, or polylactic acid, a synthetic fiber such as a polyamide such as 6-nylon or 66-nylon, a regenerated fiber such as a cellulosic polymer, or a natural fiber such as cotton or hemp.

[Polymer Elastic Body]

The polymer elastic body used in the invention is a polyurethane resin. Further, the polyurethane resin may be produced by including, as essential reaction components, the following: a polycarbonate diol containing a structural unit derived from a $C_{8-20}$ alkane diol; an organic diisocyanate; and a chain extender.

(1) Each Reaction Component of Polyurethane Resin

Hereinbelow, each reaction component of the polyurethane resin will be illustrated.

(1-1) Polycarbonate Diol

(1-1-1) Diol Component

An alkane diol for the polycarbonate diol contains 8 to 20 carbon atoms. Use of a polycarbonate diol containing a structural unit derived from such a long-chain alkane diol makes it possible to lower the percentage of carbonate group in the polyurethane. When the alkane diol contains 8 or more carbon atoms, in particular, the polyurethane can be made flexible. Further, suitable resilience can occur in the sheet-shaped article. Meanwhile, when the number of carbon atoms is 20 or less, the crystallinity of the polycarbonate diol can be increased to improve durability and wear resistance of the sheet-shaped article.

Note that the number of carbon atoms in the alkane diol is preferably 8 to 12 in view of availability. Examples include 5-methyl-2,4-heptanediol, 2-methyl-1,7-heptanediol, 1,8-octanediol, 2-methyl-1,8-octanediol, 1,9-nonanediol, 1,10-decanediol, 1,11-undecanediol, or 1,12-dodecanediol. More preferred is 1,8-octanediol, 1,9-nonanediol, 1,10-decanediol, 1,11-undecanediol, or 1,12-dodecanediol. Still more preferred is 1,9-nonanediol, 1,10-decanediol, or 1,12-dodecanediol. Particularly preferred is 1,10-decanediol.

Preferably, the polyurethane resin used in the invention further includes, as a reaction component in addition to the above polycarbonate diol, a polycarbonate diol containing a structural unit derived from a $C_{4-6}$ alkane diol. Further inclusion of, as a reaction component, such a polycarbonate diol containing a structural unit derived from a short-chain alkane diol, in particular, inclusion of a polycarbonate diol containing 6 or less carbon atoms makes it possible to suitably increase the crystallinity of the polyurethane. Besides, inclusion of a polycarbonate diol containing 4 or more carbon atoms makes it possible to not only make the sheet-shaped article more flexible, but also further enhance resilience of the polyurethane and improve crease recovery of the sheet-shaped article.

Examples of the alkane diol containing 4 to 6 carbon atoms include 1,4-butanediol, 1,5-pentanediol, 2-methyl-1,3-propanediol, neopentyl glycol, 1,6-hexanediol, 3-methyl-1,5 pentanediol, or a mixed diol of two or more kinds thereof. More preferred is 1,4-butanediol, 1,5-pentanediol, 1,6-hexanediol, 3-methyl-1,5 pentanediol, or a mixed diol of two or more kinds thereof. Most preferred is 1,6-hexanediol, 3-methyl-1,5 pentanediol, or a mixed diol thereof.

When 2 different diol components are used, the mole percentage of (A) a polycarbonate diol containing a structural unit derived from a $C_{8-20}$ alkane diol with respect to the total mole number of (A) and (B) a polycarbonate diol containing a structural unit derived from a $C_{4-6}$ alkane diol is preferably 30 mol% to 100 mol% and more preferably 40 mol% to 90 mol%. If the mole percentage of polycarbonate diol (A) is 30 mol% or higher, the texture of the sheet-shaped article is favorable. If the mole percentage is 90 mol% or lower, crease recovery of the sheet-shaped article becomes better.

From the viewpoint of texture, the polycarbonate diol has a number-average molecular weight of preferably 500 or higher, more preferably 700 or higher, and still more preferably 1000 or higher. In addition, from the viewpoint of strength, this number-average molecular weight is preferably 5000 or less, more preferably 4500 or less, and still more preferably 4000 or less.

In a polyurethane resin used in the invention, a polycarbonate diol may be used in combination with, as a reaction component, another additional polymer diol, which is a diol component, as long as the performance is not deteriorated. When used in combination, this polymer diol may be used, per total mass of the above polycarbonate diol, in an amount of preferably 0 mass% to 40 mass% and more preferably 0 mass% to 35 mass%.

Examples of the above polymer diol include a polyether diol or a polyester diol having a number-average molecular weight of preferably 500 to 5000 and more preferably 1000 to 4000.

Examples of the polyether diol include an alkylene oxide adduct of a low-molecular-weight diol or a mixture of two or more kinds thereof.

Examples of the low-molecular-weight diol include ethylene glycol, diethylene glycol, propylene glycol, 1,4-butanediol, 1,3-butanediol, neopentyl glycol, 1,6-hexanediol, 3-methyl-1,5-pentanediol; or a low molecular weight diol compound having a ring structure [e.g., an ethylene oxide adduct of bis(hydroxymethyl)cyclohexane, bis(hydroxyethyl)benzene, or bisphenol A], or a mixture of two or more kinds thereof.

Examples of the alkylene oxide include ethylene oxide, propylene oxide, tetrahydrofuran (hereinafter, sometimes abbreviated as THF), or 3-methyl-tetrahydrofuran (hereinafter, sometimes abbreviated as 3-M-THF).

These alkylene oxides may be used singly or two or more kinds thereof may be used in combination. In the latter case, it is possible to use them as a block adduct or a random adduct or in a mixed system of both. Among the alkylene oxides, preferable examples of the alkylene oxide include ethylene oxide alone, propylene oxide alone, THF alone, 3-M-THF alone, a combination of propylene oxide and ethylene oxide, a combination of propylene oxide and/or ethylene oxide and THF, or a combination of THF and 3-M-THF (in the case of a combination, a random one, a block one, or a mixed system of both).

Specific examples of such a polyether diol include polyethylene glycol, polypropylene glycol, polytetramethylene ether glycol (hereinafter, sometimes abbreviated as PTMG), poly-3-methyl-tetramethylene ether glycol, THF/ethylene oxide copolymer diol, or THF/3-M-THF copolymerized diol. Among them, PTMG is a particularly preferable polyether diol.

Examples of the polyester diol include a polyester diol obtained by reacting a dicarboxylic acid with a low-molecular-weight diol and/or a polyether diol having a molecular weight of 1000 or less or a polylactone diol obtained by ring-opening polymerization of lactone.

Examples of the low-molecular-weight diol include ethylene glycol, diethylene glycol, propylene glycol, 1,4-butanediol, 1,3-butanediol, neopentyl glycol, 1,6-hexanediol, 3-methyl-1,5-pentanediol; or a low molecular weight diol compound having a ring structure [e.g., an ethylene oxide adduct of bis(hydroxymethyl)cyclohexane, bis(hydroxyethyl)benzene, or bisphenol A], or a mixture of two or more kinds thereof.

(1-1-2) Dicarboxylic Acid Component

Meanwhile, examples of the dicarboxylic acid as a constituent of the polycarbonate diol include an aliphatic dicarboxylic acid such as "succinic acid, adipic acid, azelaic acid, or sebacic acid", an aromatic dicarboxylic acid such as "terephthalic acid, isophthalic acid, or phthalic acid", an ester-forming derivative of these dicarboxylic acids (e.g., an acid anhydride or a lower alkyl (containing 1 to 4 carbon atoms) ester), a dicarboxylic acid obtained by carbonylation and hydrolysis of lactone, or a mixture of two or more kinds thereof. Note that examples of the lactone include ε-caprilactone, γ-butyrolactone, γ-valerolactone, or a mixture of two or more kinds thereof.

(1-1-3) Specific Examples of Polycarbonate Diol

Specific examples of such a polycarbonate diol include polyethylene adipate diol, polybutylene adipate diol, polyneopentyl adipate diol, polyhexamethylene adipate diol, polyethylene butylene adipate diol, polydiethylene adipate diol, polybutylene sebacate diol, or polycaprolactone diol.

(1-2) Organic Diisocyanate

Examples of the organic diisocyanate used in the invention include a $C_{6-20}$ (excluding carbon atoms in an NCO group; the same applies to the following) aromatic diisocyanate, a $C_{2-18}$ aliphatic diisocyanate, a $C_{4-15}$ alicyclic diisocyanate, a $C_{8-15}$ aroaliphatic diisocyanate, a modified product of these diisocyanates (e.g., a carbodiimide-modified product, a urethane-modified product, a uretdione-modified product), or a mixture of two or more kinds thereof.

Specific examples of the aromatic diisocyanate include 1,3- and/or 1,4-phenylene diisocyanate, 2,4- and/or 2,6-tolylene diisocyanate, 2,4'- and/or 4,4'-diphenylmethane diisocyanate (hereinafter, abbreviated as MDI), 4,4'-diisocyanatobiphenyl, 3,3'-dimethyl-4,4'-diisocyanatobiphenyl, 3,3'-dimethyl-4,4'-diisocyanatodiphenylmethane, or 1,5-naphthylene diisocyanate.

Specific examples of the aliphatic diisocyanate include ethylene diisocyanate, tetramethylene diisocyanate, hexamethylene diisocyanate, dodecamethylene diisocyanate, 2,2,4-trimethylhexamethylene diisocyanate, lysine diisocyanate, 2,6-diisocyanatomethylcaproate, bis(2-isocyanatoethyl)carbonate, or 2-isocyanatoethyl-2,6-diisocyanatohexaate.

Specific examples of the alicyclic diisocyanate include isophorone diisocyanate, dicyclohexylmethane-4,4'-diisocyanate, cyclohexylene diisocyanate, methylcyclohexylene diisocyanate, bis(2-isocyanatoethyl)-4-cyclohexylene-1,2-dicarboxylate, or 2,5- and/or 2,6-norbornane diisocyanate.

Specific examples of the aroaliphatic diisocyanate include m- and/or p-xylylene diisocyanate or $\alpha,\alpha,\alpha',\alpha'$-tetramethylxylylene diisocyanate.

Among them, a preferable organic diisocyanate is an alicyclic diisocyanate and a particularly preferable diisocyanate is dicyclohexylmethane-4,4'-diisocyanate.

(1-3) Chain Extender

Examples of the chain extender used in the invention include water, a low-molecular-weight diol such as "ethylene glycol, propylene glycol, 1,3-butylene glycol, 1,4-butanediol, 1,6-hexanediol, diethylene glycol, or neopentyl glycol", an alicyclic diol such as "1,4-bis(hydroxymethyl)cyclohexane", an aromatic diol such as "1,4-bis(hydroxyethyl)benzene", an aliphatic diamine such as "ethylenediamine", an alicyclic diamine such as "isophoronediamine", an aromatic diamine such as "4-4-diaminodiphenylmethane", an aroaliphatic diamine such as "xylenediamine", an alkanolamine such as "ethanolamine", hydrazine, a dihydrazide such as "adipic acid dihydrazide", or a mixture of two or more kinds thereof.

Among them, a preferable chain extender is water, a low-molecular-weight diol, or an aromatic diamine. More preferred is water, ethylene glycol, 1,4-butanediol, 4,4'-diaminodiphenylmethane, or a mixture of two or more kinds thereof.

(2) Additives for Polyurethane Resin

To the polyurethane resin may be optionally added: a colorant such as titanium oxide, various stabilizers such as a UV absorber (e.g., a benzophenone-based or benzotriazole-based one) and an antioxidant [e.g., a hindered phenol such as 4,4-butylidene-bis(3-methyl-6-1-butylphenol); an organic phosphite such as triphenylphosphite or trichloroethyl phosphite], an inorganic filler (e.g., calcium carbonate), and/or a known coagulation modifier [e.g., higher alcohols; cetyl alcohol, stearyl alcohol (Japanese Patent Publication (JP-B) No. 42-22719), crystalline organic compounds; purified octadecyl alcohol, purified stearyl alcohol (Japanese Patent Publication (JP-B) No. 56-41652), hydrophobic nonionic surfactants; sorbitan monostearate, sorbitan palmitate (Japanese Patent Publication (JP-B) No. 45-39634 and Japanese Patent Publication (JP-B) No. 45-39635)]. The total additive amount (content) of the additives with respect to the polyurethane resin (D) is preferably 10 mass% or less and more preferably 0.5 mass% to 5 mass%.

(3) Structure of Polyurethane Resin

It is preferable to include a component derived from a biomass resource in the above polyurethane resin because an environmental burden can be reduced. It is particularly preferable to use, as a component derived from this biomass resource, a component derived from a biomass resource, a raw material of which is relatively easily obtained, in the polycarbonate diol among the reaction components of the polyurethane resin.

Note that in the case of using a biomass resource-derived component in the above polycarbonate diol, the polycarbonate diol may consist of the biomass resource-derived component or may include a copolymer containing a biomass resource-derived polycarbonate diol and an oil resource-derived polycarbonate diol. From the viewpoint of reducing an environmental burden, it is preferable that the amount of the biomass resource-derived polycarbonate diol is larger than that of the oil resource-derived polycarbonate diol.

In the polymer elastic body of a sheet-shaped article in the invention, the biomass plastic content defined according to ISO16620 (2015) is preferably 5% to 100%. Because the environmental burden can be further reduced, the biomass plastic content of the polymer elastic body is more preferably 15% or higher and still more preferably 25% or higher.

When the biomass plastic content of the polymer elastic body from the sheet-shaped article is measured, it is possible to appropriately adopt, depending on the constituent of the sheet-shaped article, for instance, a procedure for extracting and isolating a component of the polymer elastic body by using a solvent only miscible with the polymer elastic body or, by contrast, a procedure for removing the ultrafine fiber and resin layer components by using a solvent miscible with them. Except for the above, the following protocol is used to measure the biomass plastic content.

(1) ISO16620-2 is used to measure biobased carbon content in all the carbon components constituting a sample.
(2) The sample-constituting components and their component ratio are identified.
Note that for the identification, it is possible to use a known method such as GC-MS, NMR, or element analysis.
(3) From the results of (1) and (2), the biomass resource-derived component is specified.
(4) The percentage (mass ratio) of the biomass resource-derived component among the sample components is calculated as the biomass plastic content of the sample.

The number-average molecular weight of the polyurethane resin used in the invention is preferably 20000 or larger from the viewpoint of the resin strength and is preferably 500000 or smaller from the viewpoints of viscosity stability and workability. The number-average molecular weight is more preferably 30000 to 150000.
The number-average molecular weight of the above polyurethane resin may be calculated by gel permeation chromatography and may be measured, for instance, under the conditions below.

- Apparatus: HLC-8220, manufactured by TOSOH CORPORATION.
- Column: TOSOH TSKgel $\alpha$-M.
- Solvent: DMF.
- Temperature: 40°C.
- Calibration: Polystyrene.

The polymer elastic body used in the invention can suitably retain fibers in the sheet-shaped article. Preferably, from the viewpoint of providing at least one napped surface of the sheet-shaped article, the polymer elastic body is present in an inside space of the nonwoven fabric in a preferable embodiment.

[Sheet-Shaped Article]

In a sheet-shaped article of the invention, any crease is unlikely to remain during actual use. Accordingly, the crease recovery rate, which indicates how unlikely a crease remains during actual use, is an important index. The bending and crease recovery rate of the sheet-shaped article of the invention is 80% to 100%. When the crease recovery rate is 80% or higher, preferably 85% or higher, and more preferably 90% or higher, the sheet-shaped article can be said such that the crease can be rapidly recovered after a load imposed on the sheet-shaped article has been removed.
Note that the bending and crease recovery rate herein is calculated by folding a test piece in two, applying a load of 1 lb. for 5 min, and measuring the angle at 10 sec after removal of the load while the state in which the test piece remains completely folded and is not recovered is evaluated as 0% and the state in which the test piece returns completely to the original state before the folding is evaluated as 100%. Thus, the upper limit of the crease recovery rate is 100%.
It is necessary in the invention to establish both the flexibility and the crease recovery rate of a sheet-shaped article. Meanwhile, it is difficult that only a function of the polymer elastic body is used to confer both the flexibility and the crease recovery rate. This is because in order to make the sheet-shaped article flexible, the crystallinity of the polymer elastic body should be decreased to make the polymer elastic body flexible. However, a polymer elastic body with low crystallinity cannot elicit a quick stretch back property even if the stretchability is elicited. To elicit the quick stretch back property, the crystallinity of the polymer elastic body should be increased. In this case, the polymer elastic body becomes hard and the texture of the sheet-shaped article is thus rigid. Further, to establish both the flexible texture and increased crease recovery rate of the sheet-shaped article, the flexible texture may be given to the polymer elastic body after the below-described PVA addition; the PVA-removing process may then be applied. In this way, the flexible texture may be elicited from the structure of the polymer elastic body without directly retaining fibers. The increased crease recovery rate may be exhibited by the polymer elastic body with adjusted crystallinity.

[Method for Producing Sheet-Shaped Article]

Next, a method for producing a sheet-shaped article according to the invention will be described.
Direct spinning and/or ultrafine fiber-generating fibers may be used as a means for obtaining ultrafine fibers used in the invention. Here, among them, the ultrafine fiber-generating fibers may be used in a preferable embodiment. Examples of the ultrafine fiber-generating fibers employed include: sea-island composite fibers in which a sea component and an island component are made of two thermoplastic resin components with different solvent solubilities, only the sea component is dissolved and removed using, for instance, a solvent to yield ultrafine fibers as the island component; or peelable composite fibers or multi-layer composite fibers in which two thermoplastic resin components are alternately arranged to make a fiber cross section radiated or layered, and each component is peeled or split into ultrafine fibers. Because the product quality can be uniform, the sea-island composite fibers are preferably used.
Examples of the sea component of the sea-island composite fibers include a polyolefin such as polyethylene or polypropylene, polystyrene, sodium sulfoisophthalate, a copolymer ester obtained by copolymerizing polyethylene glycol, polylactic acid, or polyvinyl alcohol, or a copolymer thereof.

An ultrafine fiber-generating process (sea-component-removing process) for the sea-island composite fibers may be carried out by soaking the sea-island composite fibers into a solvent and by squeezing them. As the solvent for dissolving the sea component, it is possible to use an organic solvent such as toluene or trichlorethylene, an alkaline aqueous solution such as sodium hydroxide, or hot water.

The ultrafine fiber-generating process may be implemented by using a machine such as a continuous dyeing machine, a vibro-washer-type sea-component-removing machine, a jet dyeing machine, a wins dyeing machine, or a jigger dyeing machine.

The sea component may be dissolved and removed at any of the timing before or after the polymer elastic body is imparted. If the sea-component-removing process is carried out before the polymer elastic body is imparted, the ultrafine fibers can be strongly retained by the structure of the polymer elastic body directly and tightly attached to the ultrafine fibers. This make better the wear resistance of the sheet-shaped article. By contrast, if the sea-component-removing process is carried out after the polymer elastic body is imparted, a space caused by removing the sea component occurs between the polymer elastic body and the ultrafine fibers. This makes the texture of the sheet-shaped article flexible because the polymer elastic body does not directly retain the ultrafine fibers.

It is preferable that the mass ratio between the sea component and the island component in the sea-island composite fibers used in the invention ranges from the sea component : the island component = 10 : 90 to 80 : 20. When the mass ratio of the sea component is lower than 10 mass%, the island component is made insufficiently ultrafine. In addition, when the mass ratio of the sea component exceeds 80 mass%, the proportion of the eluted component is large and the productivity is thus lowered. The mass ratio between the sea component and the island component is more preferably in a range of the sea component : the island component = 20 : 80 to 70 : 30.

When the ultrafine fiber-generating fibers represented by the sea-island composite fibers are stretched in the invention, an unstretched yarn may be once wound and then stretched in another time or an unstretched yarn may be withdrawn and stretched continuously as they are. Either process can be adopted. The stretching may be conducted, if appropriate, by a one-to-three stretching step using wet heat or dry heat or both. Next, the stretched sea-island composite fibers may be preferably crimped and cut into a predetermined length to produce raw stock for a nonwoven fabric. A common procedure can be used for the crimping and/or cutting.

It is preferable that a buckling crimp is given to a composite fiber such as each sea-island composite fiber used in the invention. This is because the buckling crimp can cause the fibers to be interlaced when a short-fiber nonwoven fabric is formed, thereby making high the density and the degree of interlacing. To give a composite fiber a buckling crimp, a typical stuffing box-type crimper is preferably used. To obtain a preferable crimp retention factor in the invention, the processed fiber fineness, the crimper temperature, the crimper load, and the pushing pressure, for instance, may be adjusted, if appropriate, in a preferable embodiment.

The crimp retention factor of the ultrafine fiber-generating fiber given a buckling crimp is preferably in a range of 3.5 to 15 and more preferably in a range of 4 to 10. When the crimp retention factor is 3.5 or larger, the stiffness of nonwoven fabric in the thickness direction when the nonwoven fabric is formed is increased. This makes it possible to maintain interlacing performance during an interlacing step such as needle punching. In addition, when the crimp retention factor is 15 or less, crimps are not too strong and the fiber-opening performance for fibrous web is thus excellent during carding.

As used herein, the crimp retention factor is expressed by the following equation.

$$\text{Crimp retention factor} = (W/L-L_0)^{1/2}.$$

- W: Crimp disappearance load (load when a crimp is maximally stretched: mg/dtex).
- L: Fiber length (cm) under crimp disappearance load.
- $L_0$: Fiber length (cm) at 6 mg/dtex. Here, 30.0 cm is marked.

As a measurement protocol, a load of 100 mg/dtex is first applied to a sample. Next, the load is incremented by 10 mg/dtex. Then, the resulting crimp state is checked. Subsequently, the load is increased until the crimp is maximally stretched. When the crimp is in a maximally stretched state, the marking length (the distance from 30.0 cm) is measured.

The single fiber fineness of each composite fiber used in the invention preferably ranges from 2 dtex to 10 dtex and more preferably from 3 dtex to 9 dtex from the viewpoint of interlacing performance during, for instance, a needle punching step.

Each composite fiber used for producing a sheet-shaped article of the invention has a contraction rate, at a temperature of 98°C, of preferably 5% to 40% and more preferably 10% to 35%. When the contraction rate is within this range, hydrothermal treatment can cause the fiber density to increase, thereby realizing a touch inspiring real leather.

Specifically regarding the contraction rate-measuring protocol, a load of 50 mg/dtex is first applied to a composite fiber bundle. Next, 30.0 cm is marked ($L_0$). Then, 10-min treatment in hot water at a temperature of 98°C is carried out. Subsequently, the lengths (e.g., $L_1$) before and after the treatment are measured. Finally, $(L_0-L_1)/L_0 \times 100$ is calculated. The measurement is triplicated, and the resulting average is defined as the contraction rate.

As used herein, the number of fibers in the ultrafine fiber bundle is preferably 8 fibers/bundle to 1000 fibers/bundle and more preferably 10 fibers/bundle to 800 fibers/bundle. When the number of fibers is less than 8 fibers/bundle, the ultrafine fibers have poor compactness. For instance, the mechanical property such as wearing tends to decrease. In addition, when the number of fibers is larger than 1000 fibers/bundle, the fiber-opening performance at the time of napping was reduced and the fiber distribution on the napped surface was ununiform. Thus, a satisfactory product quality was not obtained.

As a process for producing a nonwoven fabric, namely interlaced fibers constituting a sheet-shaped article of the invention, it is possible to use a process for interlacing a composite fiber web by needle punching or water-jet punching, spun bonding, melt-blowing, or papermaking. Among them, it is preferable to use a process undergoing treatment such as needle punching or water-jet punching so as to provide the previously mentioned ultrafine fiber bundle form.

The nonwoven fabric may be prepared such that a nonwoven fabric and a woven or knitted fabric are layered and integrated as described above. It is preferable to use a process for integrating them by needle punching or water-jet punching.

The number of needle barbs (notches) of a needle used for the needle punching is preferably 1 to 9. Preferably, when the number of needle barbs is 1 or more, the fibers can be interlaced efficiently. In addition, preferably, when the number of needle barbs is 9 or less, damage on the fibers can be reduced.

The number of composite fibers hooked by the barbs is determined depending on the shape of the barbs and the diameter of the composite fibers. Due to this, each barb of a needle used during the needle punching step is preferably shaped such that the kick-up is 0 $\mu$m to 50 $\mu$m, the undercut angle is 0 degrees to 40 degrees, the throat depth is 40 $\mu$m to 80 $\mu$m, and the throat length is 0.5 mm to 1.0 mm.

In addition, the number of punching sites is preferably 1000 sites/cm$^2$ to 8000 sites/cm$^2$. When the number of punching sites is 1000 sites/cm$^2$ or more, the compactness can be obtained and the finishing can be achieved with high precision. In addition, preferably, when the number of punching sites is 8000 sites/cm$^2$, it is possible to prevent deterioration of workability, damage on the fibers, and a decrease in the strength.

Meanwhile, when water-jet punching is carried out, it is preferable that water is in a pillar-shaped stream state. Specifically, water is jetted from nozzles with a diameter of 0.05 mm to 1.0 mm at a pressure of 1 MPa to 60 MPa.

The apparent density of the nonwoven fabric after needle punching or water-jet punching is preferably 0.15 g/cm$^3$ to 0.45 g/cm$^3$. Preferably, when the apparent density is 0.15 g/cm$^3$ or higher, the sheet-shaped article should have sufficient shape stability and dimension stability. In addition, preferably, when the apparent density is 0.45 g/cm$^3$ or lower, a sufficient space can be kept such that the polymer elastic body is imparted.

From the viewpoint of compactness, the nonwoven fabric as so obtained may be contracted and further highly compacted by dry heat or wet heat or by both in a preferable embodiment. Also, the nonwoven fabric may be compressed in the thickness direction by, for instance, calendaring.

In the invention, PVA is imparted to a fibrous substrate. Here, a procedure for imparting PVA to a fibrous substrate is not limited and various procedures commonly used in the art may be adopted. However, a procedure for dissolving PVA in water, impregnating a fibrous substrate therewith, and then heating and drying them is the simplest step and thus preferable. If the drying temperature is too low, it is necessary to prolong the drying time. If the temperature is too high, the PVA is insoluble and subsequent dissolution and removal is impossible. Thus, it is preferable to dry them at an ambient temperature of 80°C to 170°C. The drying temperature is more preferably 110°C to 150°C. The drying time is usually 1 min to 20 min and, from the viewpoint of workability, preferably 1 min to 10 min, and more preferably 1 min to 5 min. In addition, to further make PVA insoluble, the drying may be followed by heating treatment. The preferable ambient temperature during the heating treatment is 80°C to 170°C. The heating treatment causes PVA to be insoluble and heat-deteriorated. These can progress simultaneously. Accordingly, the more preferable temperature is 80°C to 140°C.

It is preferable that PVA used in the invention has a saponification degree of 98% or higher and a polymerization degree of 500 to 3500. When PVA has a saponification degree of 98% or higher, the PVA can be prevented from being dissolved in a water-dispersible polyurethane liquid at the time of imparting the water-dispersible polyurethane. When PVA is dissolved in a water-dispersible polyurethane liquid, it is difficult to obtain a sufficient effect of protecting the surface of ultrafine fibers constituting a raised nap. Besides, when the water-dispersible polyurethane liquid having PVA dissolved is imparted to the fibrous substrate, the PVA is incorporated in the polyurethane. This makes it difficult to remove the PVA later. Hence, the state of contact between the polyurethane and the fibers cannot be stably controlled, and as a result of which the texture becomes rigid.

In addition, the PVA solubility into water varies depending on the polymerization degree. As the polymerization degree of PVA becomes smaller, the PVA is dissolved more in the water-dispersible polyurethane liquid when the water-dispersible polyurethane is imparted. As the polymerization degree of PVA becomes higher, the viscosity of the PVA aqueous solution increases. Accordingly, the PVA cannot be permeated into the fibrous substrate when the fibrous substrate is impregnated in the PVA aqueous solution. Thus, the polymerization degree of PVA is preferably 1000 to 3000 and more preferably 1200 to 2500.

The amount of PVA imparted to the fibrous substrate with respect to the fiber mass of the fibrous substrate is 0.1 mass% to 50 mass% and preferably 1 mass% to 45 mass%. When the amount of PVA imparted is 0.1 mass% or larger, a sheet-shaped article with favorable flexibility and texture can be obtained. When the amount of PVA imparted is 50 mass% or smaller, a sheet-shaped article with satisfactory workability and excellent physical properties such as wear resistance can be obtained.

In the invention, a water-dispersible polyurethane resin, which is a polymer elastic body, is imparted to a nonwoven fabric. Here, the water-dispersible polyurethane resin may be imparted to any of a nonwoven fabric made of composite fibers or a nonwoven fabric in which fibers are made ultrafine.

Regarding coagulation after the water-dispersible polyurethane is imparted, dry coagulation or wet coagulation or a combination thereof may be used for the coagulation.

The water-dispersible polyurethane is classified into (I) a forcibly emulsified polyurethane obtained by forcibly dispersing and stabilizing polyurethane in water by using a surfactant and (II) a self-emulsified polyurethane obtained by dispersing and stabilizing polyurethane in water in the absence of a surfactant. Any of them may be used in the invention.

A procedure for imparting a water-dispersible polyurethane to a fibrous substrate is not particularly limited. Here, because the polyurethane can be imparted uniformly, a procedure is preferable, including impregnating and coating a fibrous substrate in and with a water-dispersible polyurethane liquid and coagulating and then heating and drying them.

From the viewpoint of storage stability of a water-dispersible polyurethane liquid, the concentration of water-dispersible polyurethane liquid (i.e., the content of polyurethane in the water-dispersible polyurethane liquid) is preferably 10 mass% to 50 mass% and more preferably 15 mass% to 40 mass%.

In addition, to improve the storage stability and film-forming potential, the content of water-soluble organic solvent in the water-dispersible polyurethane liquid used in the invention may be 40 mass% or less. The content of the organic solvent is preferably 1 mass% or less in view of, for instance, protecting a film-forming environment.

Further, as the water-dispersible polyurethane liquid used in the invention, preferred are those having a heat-sensitive coagulation characteristic. Use of the water-dispersible polyurethane liquid having a heat-sensitive coagulation characteristic makes it possible to uniformly impart the polyurethane to the fibrous substrate in the thickness direction.

The heat-sensitive coagulation characteristic herein refers to a characteristic of decreasing fluidity of polyurethane liquid and coagulating the polyurethane after a certain temperature (heat-sensitive coagulation temperature) is reached at the time of heating the polyurethane liquid. During manufacture of a polyurethane-imparted sheet-shaped article, a polyurethane liquid is imparted to a fibrous substrate; the resulting material is then coagulated and dried by dry coagulation, wet-heat coagulation, wet coagulation, or a combination thereof so as to impart the polyurethane to the fibrous substrate. As a procedure for coagulating a water-dispersible polyurethane liquid without a heat-sensitive coagulation characteristic, dry coagulation may be actually implemented in industrial production. In this case, a migration phenomenon, where polyurethane is concentrated on the surface layer of a fibrous substrate, occurs. Then, the resulting polyurethane-imparted sheet-shaped article tends to have a rigid texture. In this case, the migration can be prevented by adjusting the viscosity of the water-dispersible polyurethane liquid by using a thickener. In addition, in the case of a water-dispersible polyurethane liquid having a heat-sensitive coagulation characteristic, the migration can be prevented by performing dry coagulation while adding a thickener.

Examples of the thickener used include a polysaccharide such as guar gum or a nonionic surfactant.

The water-dispersible polyurethane liquid has a heat-sensitive coagulation temperature of preferably 55°C to 80°C. When the heat-sensitive coagulation temperature is 55°C or higher, the polyurethane liquid has favorable stability during storage. Thus, it is possible to reduce, for instance, attachment of polyurethane to a machine during operation. When the heat-sensitive coagulation temperature is 80°C or lower, it is possible to suppress a phenomenon that polyurethane is migrated to the surface layer of a fibrous substrate. Further, before water content evaporates from the fibrous substrate, polyurethane coagulation proceeds. This can cause formation of the structure in which polyurethane does not strongly entangle fibers, thereby capable of achieving favorable flexibility and resilience and excellent folded-crease recovery.

In an embodiment of the invention, a heat-sensitive coagulant may be added, if appropriate, so as to set the heat-sensitive coagulation temperature as above. Examples of the heat-sensitive coagulant include: an inorganic salt such as sodium sulfate, magnesium sulfate, calcium sulfate, calcium chloride, or sodium chloride; or a radical reaction initiator such as sodium persulfate, potassium persulfate, ammonium persulfate, azobisisobutyronitrile, or benzoyl peroxide.

In a preferable embodiment of the invention, the fibrous substrate may be impregnated in and coated with a polyurethane liquid, and the polyurethane may then be coagulated by dry coagulation, wet-heat coagulation, wet coagulation, or a combination thereof.

The temperature during the wet-heat coagulation is preferably the heat-sensitive coagulation temperature of polyurethane or higher and is preferably 40°C to 200°C. When the wet-heat coagulation temperature is 40°C or higher and more preferably 80°C or higher, the time until polyurethane coagulation can be shortened to suppress the migration phenomenon. In addition, when the wet-heat coagulation temperature is 200°C or lower and more preferably 160°C or lower, it is possible to prevent the polyurethane and PVA from being heat-deteriorated.

The wet coagulation temperature is set to the heat-sensitive coagulation temperature of polyurethane or higher and is preferably 40°C to 100°C. When the temperature of wet coagulation in hot water is 40°C or higher and more preferably 80°C or higher, the time until polyurethane coagulation can be shortened to suppress the migration phenomenon.

The ambient temperature during the dry coagulation and the ambient temperature during drying is preferably 80°C to 140°C. When the ambient temperature during the dry coagulation and the ambient temperature during drying is 80°C or higher and more preferably 90°C or higher, the productivity is excellent. In addition, when the ambient temperature during the dry coagulation and the ambient temperature during drying is 140°C or lower and more preferably 130°C or lower, it is possible to prevent the polyurethane and PVA from being heat-deteriorated.

In the invention, the polyurethane coagulation may be followed by heating treatment. The heating treatment causes the interface between polyurethane molecules to decrease, thereby providing a more rigid polyurethane. In a more preferable embodiment, after PVA is removed from the water-dispersed-polyurethane-imparted sheet, heating treatment is preferably conducted. The ambient temperature during the heating treatment is preferably 80°C to 170°C.

The invention includes a step of removing PVA from the water-dispersible-polyurethane-imparted fibrous substrate. PVA may be removed from the water-dispersible-polyurethane-imparted fibrous substrate to produce a flexible sheet-shaped article. Here, the PVA removal procedure is not particularly limited. In a preferable embodiment, for instance, the sheet is impregnated in hot water at a temperature of 60°C to 100°C and then squeezed optionally using, for instance, a mangle to dissolve and remove PVA.

In the PVA-imparted step, PVA is migrated and abundantly attached to the surface layer of the fibrous substrate, so that the amount of PVA imparted to the inner layer is small. After the water-dispersible polyurethane is imparted, the resulting material is cut in half in the thickness direction to produce a sheet-shaped article structured such that a smaller amount of water-dispersible polyurethane is imparted on the side of having a larger amount of PVA imparted and a larger amount of water-dispersible polyurethane is imparted on the side of having a smaller amount of PVA imparted. The surface having a larger amount of PVA imparted (the surface having a smaller amount of water-dispersible polyurethane imparted) may be a napped surface of the sheet-shaped article. In this case, imparting PVA may cause a large space between the polyurethane and the ultrafine fibers constituting a raised nap. This gives freedom to the fibers constituting a raised nap and as a result of which the surface texture becomes flexible to give a satisfactory external appearance quality and a soft touch. By contrast, the surface having a smaller amount of PVA imparted (the surface having a larger amount of water-dispersible polyurethane imparted) may be a napped surface of the sheet-shaped article. In this case, the fibers constituting a raised nap are strongly retained by the polyurethane. This can produce a satisfactory external appearance quality giving a compact feel while the length of raised nap is short. Further, the wear resistance becomes better. Furthermore, if a step of cutting the sheet in half in the thickness direction is included, the production efficiency can be increased.

In the invention, at least one surface of a sheet-shaped article is napped to form a raised nap on its surface. How to form a raised nap is not particularly limited and various procedures commonly used in the art, such as buffing using a sandpaper, may be used. If the length of raised nap is too short, a beautiful external appearance is unlikely to be obtained. If too long, pilling is likely to occur. Thus, the length of raised nap is preferably 0.2 mm to 1 mm.

In addition, in an embodiment of the invention, prior to the napping, a lubricant such as silicone may be imparted to the sheet-shaped article. When a lubricant is imparted, napping can be made easy by surface grinding. This is preferable because the surface quality is very favorable. In addition, an antistatic agent may be imparted before the napping. When an antistatic agent is imparted, grinding powder generated from a sheet-shaped article by grinding is unlikely to be deposited on a sandpaper. This is thus a preferable embodiment.

In an embodiment of the invention, the sheet-shaped article may be dyed. As the dyeing procedure, various procedures commonly used in the art may be adopted. Here, the sheet-shaped article may be made flexible by adding a softening effect at the same time of dyeing the sheet-shaped article. Thus, a procedure using a jet dyeing machine is preferable.

Depending on the kind of fibers, the dyeing temperature is preferably 80°C to 150°C. When the dyeing temperature is 80°C or higher and more preferably 110°C or higher, the fibers can be dyed efficiently. In addition, when the dyeing temperature is 150°C or lower and more preferably 130°C or lower, the polyurethane can be prevented from being deteriorated.

A dye used in the invention can be selected in accordance with the kind of fibers included in the fibrous substrate, and is not particularly limited. For instance, any disperse dye may be used in the case of a polyester-based fiber. In the case of a polyamide-based fiber, an acidic dye and/or a gold-including dye may be used. Further, a combination thereof may be used. In the case of dyeing with a disperse dye, the dyeing is followed by reduction cleaning.

In addition, a dyeing auxiliary may be used during dyeing in a preferable embodiment. When a dyeing auxiliary is used, it is possible to increase evenness and reproducibility of dyeing. Further, in the same bath during dyeing or after dyeing, it is possible to carry out treatment using a finishing agent(s) such as a softener such as silicone, an antistatic agent, a water repellent, a flame retardant, a light stabilizer, and/or an antimicrobial.

EXAMPLES

Next, sheet-shaped articles of the invention will be further specifically described using Examples.

[Evaluation Protocols]

(1) Average Single-Fiber Diameter of Sheet-Shaped Article

A cross section orthogonal to the thickness direction of a fiber-containing sheet-shaped article was inspected at 3000x under a scanning electron microscope (SEM: Model VE-7800, manufactured by KEYENCE CORPORATION). Then, the diameters of 50 single fibers randomly extracted within a visual field of 30 $\mu$m $\times$ 30 $\mu$m were measured and represented in $\mu$m, which diameters were round off to the first decimal place. In this regard, this procedure was repeated at 3 sites to measure the diameters of the total 150 single fibers. The diameters were averaged and calculated to the first decimal place. When fibers with a fiber diameter of more than 50 $\mu$m were mixed in, these fibers were determined not to fall under ultrafine fibers and were excluded from subjects for the average fiber diameter measurement. In addition, when ultrafine fibers had a modified cross section, the cross-section area of each single-fiber was first measured as described above, and the diameter when the cross section was assumed to be circular was estimated to determine the diameter of the single fiber. Each diameter-containing mother population was averaged to define the average single-fiber diameter.

(2) Flexibility of Sheet-Shaped Article

Based on A test (45-degree cantilever test) described in section 8.21.1 of the chapter 8.21 "Stiffness" in JIS L 1096:2010 "Texture Test Protocol for Woven Fabrics and Knitted Fabrics", 5 test pieces of 2 $\times$ 15 cm were prepared in the longitudinal direction and in the width direction. Each test piece was placed on a flat table having a slope at an angle of 45 degrees, and was made to glide. Next, when a middle point at one end of the test piece was in contact with the slope, the scale was read. Then, the values for the five test pieces were averaged.

(3) Resilience of Sheet-Shaped Article

Resilience of each sheet-shaped article was assessed by a touch sensation in accordance with the following criteria.

Grade 5: Highly resilient texture
Grade 4: Somewhat resilient texture
Grade 3: Somewhat paper-like texture
Grade 2: Paper-like texture
Grade 1: Very paper-like texture

(4) Bending and Crease Recovery Rate of Sheet-Shaped Article

First, 5 test pieces of 10 cm $\times$ 10 cm were prepared, and each test piece was folded in two; a load of 1 lb. was applied for 5 min; the angle at 10 s after load removal was measured; and the values for the 5 test pieces were averaged. The bending and crease recovery rate was evaluated while the completely folded state was defined as 0% and the state in which the test piece returned completely to the original state before the folding was defined as 100%.

(5) Coagulation Temperature of Polyurethane Liquid

First, 20 g of polyurethane liquid was put into a test tube with an inner diameter of 12 mm; a thermometer was inserted such that the tip is below the liquid level; and the test tube was then sealed and submerged in a hot water bath at a temperature of 95°C such that the liquid level of polyurethane liquid was below the liquid level of the hot water bath. While the temperature rise inside the test tube was checked by the thermometer, the test tube was lifted, if appropriate, and was swung for 5 sec or less per check so as to examine the presence or absence of fluidity of the polyurethane liquid at its surface. Then, the temperature at which the polyurethane liquid at its surface lost fluidity was defined as the coagulation temperature. This measurement was triplicated per kind of polyurethane liquid, and then averaged.

[How Chemicals Were Designated]

The meanings of the following abbreviated chemicals used in Reference Examples are as follows.

- EG: Ethylene glycol
- SSIA: 5-Sodium sulfoisophthalate
- Hydrogenated MDI: 4,4'-Dicyclohexylmethane diisocyanate
- DMPA: 2,2-Dimethylol propionic acid
- PVA: Polyvinyl alcohol

[Reference Example 1: To Synthesize Polyurethane Resin Aqueous Dispersion (1)]

To a pressurizable vessel equipped with a stirrer and a thermometer were added 200 parts by mass of 1,10-decanediol/1,4-butanediol (the mol% ratio: 70/30; the parts-by-mass ratio: 140 parts by mass/60 parts by mass) copolymerized polycarbonate diol with a number-average molecular weight of 1989 (a hydroxyl value of 56.4), 9 parts by mass of EG, 5 parts by mass of DMPA, 56 parts by mass of hydrogenated MDI, and 112 parts by mass of acetone. Next, the reaction system was replaced by nitrogen gas. Then, the mixture was stirred and reacted for 12 h, while the temperature of the solution was kept at 80°C, to prepare an acetone solution of an urethane polymer containing a terminal isocyanate group. The resulting acetone solution was cooled to a temperature of 25°C. Subsequently, 743 parts by mass of acetone as a diluent and 7 parts by mass of triethylamine as a neutralizer were added. After 583 parts by mass of water was added to the acetone solution and the mixture was stirred and emulsified with a homomixer for 1 min, the acetone was distilled away under reduced pressure. The resulting solution was cooled to a temperature of 25°C and water was then added to adjust the solid content to 40 mass%. In this way, a polyurethane resin aqueous dispersion (1) was obtained.

[Reference Example 2: To Synthesize Polyurethane Resin Aqueous Dispersion (2)]

The same procedure as in Reference Example 1 was repeated to adjust the solid content to 40 mass%, except that the composition ratio of copolymerized polycarbonate diol in Reference Example 1 was changed to 1,10-decanediol/1,4-butanediol having a mol% ratio of 50/50 and a parts-by-mass ratio of 100 parts by mass/100 parts by mass. In this way, a polyurethane resin aqueous dispersion (2) was obtained.

[Reference Example 3: To Synthesize Polyurethane Resin Aqueous Dispersion (3)]

The same procedure as in Reference Example 1 was repeated to adjust the solid content to 40 mass%, except that the copolymerized polycarbonate diol in Reference Example 1 was changed to a polycarbonate diol consisting of 1,10-decanediol. In this way, a polyurethane resin aqueous dispersion (3) was obtained.

[Reference Example 4: To Synthesize Polyurethane Resin Aqueous Dispersion (4)]

The same procedure as in Reference Example 1 was repeated to adjust the solid content to 40 mass%, except that the copolymerized polycarbonate diol in Reference Example 1 was changed to a polycarbonate diol consisting of 1,6-hexane diol. In this way, a polyurethane resin aqueous dispersion (4) was obtained.

[Example 1]

(Nonwoven Fabric)

A copolymerized polyester containing 8 mol% of SSIA was used as a sea component and polyethylene terephthalate was used as an island component to produce sea-island composite fibers with an average single-fiber diameter of 20 $\mu$m while the composite ratio of the sea component : the island component was 20 mass% : 80 mass% and the number of islands was 16 islands/1 filament. The resulting sea-island composite fibers were cut into a fiber length of 51 mm to prepare a staple, which went through a carding machine and a cross wrapper to form a fiber web. This fiber web was subjected to needle punching to produce a nonwoven fabric with a weight per area of 750 g/m$^2$ and a thickness of 3.2 mm. The nonwoven fabric as so obtained was soaked and contracted in hot water at a temperature of 98°C for 2 min, and was then dried at a temperature of 100°C for 5 min to prepare a nonwoven fabric for fibrous substrate.

(Fiber Reinforcement)

The above nonwoven fabric for fibrous substrate was impregnated in an aqueous solution containing 10 mass% of PVA (NM-14, manufactured by The Nippon Synthetic Chemical Industry Co., Ltd.) with a saponification degree of 99% and a polymerization degree of 1400, and was heated and dried at a temperature of 140°C for 10 min to yield a PVA-imparted sheet in which the amount of PVA imparted per fiber mass of the nonwoven fabric for fibrous substrate was 30 mass%.

(To Make Fibers Ultrafine)

The resulting PVA-imparted sheet was impregnated and treated for 30 min in aqueous sodium hydroxide that was heated to a temperature of 95°C and was at a concentration of 10 g/L. Then, a sheet (PVA-imparted ultrafine fiber nonwoven fabric) composed of ultrafine fibers, in which the sea component had been removed from the sea-island composite fibers, was obtained.

(To Impart Polyurethane Resin)

Next, 2 mass% of sodium sulfate (designated as "$Na_2SO_4$" in Table 2) as a heat-sensitive coagulant was added per 100 mass% of the solid content of the polyurethane resin aqueous dispersion (1) to prepare, using water, the whole at a solid content of 10 mass%. In this way a water-dispersible polyurethane liquid was obtained. The heat-sensitive coagulation temperature was 65°C. The resulting PVA-imparted ultrafine fiber nonwoven fabric was impregnated in the above aqueous dispersion, and was then dried for 15 min under hot air at a temperature of 150°C to give a polyurethane resin-imparted sheet to which 25 mass% of polyurethane per fiber weight was imparted and the thickness of which was 1.8 mm.

(To Remove Reinforcement Resin)

The resulting polyurethane resin-imparted sheet was submerged and treated for 10 min in water heated to 95°C to prepare a sheet from which the imparted PVA had been removed.

(For Cutting in Half and Napping)

The resulting PVA-removed, polyurethane resin-imparted sheet was cut in half in a direction orthogonal to the thickness direction. The side opposite to the half-cutting surface was subjected to grinding with an endless sandpaper of sandpaper count No. 240 to yield a sheet-shaped article having a raised nap with a thickness of 0.7 mm.

(For Dyeing and Finishing)

The resulting napped sheet-shaped article was dyed with a black dye by using a jet dyeing machine under conditions at a temperature of 120°C, and then dried with a drier to produce a sheet-shaped article having ultrafine fibers with an average single-fiber diameter of 4.4 $\mu$m. The sheet-shaped article obtained had a flexible texture and favorable resilience. In addition, the crease recovery rate was satisfactory.

[Example 2]

(Nonwoven Fabric)

A copolymerized polyester containing 8 mol% of SSIA was used as a sea component and polyethylene terephthalate was used as an island component to produce sea-island composite fibers with an average single-fiber diameter of 17 $\mu$m while the composite ratio of the sea component : the island component was 45 mass% : 55 mass% and the number of islands was 36 islands/1 filament. The resulting sea-island composite fibers were cut into a fiber length of 51 mm to prepare a staple, which went through a carding machine and a cross wrapper to form a fiber web. This fiber web was subjected to needle punching to produce a nonwoven fabric with a weight per area of 750 g/m$^2$ and a thickness of 3 mm. The nonwoven fabric as so obtained was soaked and contracted in hot water at a temperature of 98°C for 2 min, and was then dried at a temperature of 100°C for 5 min to prepare a nonwoven fabric for fibrous substrate.

(Fiber Reinforcement) to (Dyeing and Finishing)

The same procedure as in Example 1 was repeated from the fiber reinforcement to the dyeing and finishing to produce a sheet-shaped article having ultrafine fibers with an average single-fiber diameter of 3 $\mu$m. The sheet-shaped article obtained had a flexible texture and favorable resilience. In addition, the crease recovery rate was satisfactory.

[Examples 3 and 4]

The same procedure as in Example 1 was repeated, except that the polyurethane resin aqueous dispersion in Example 1 (while the polyurethane resin was imparted) was changed (specifically changed to the polyurethane resin aqueous dispersion (2) in Example 3 or the polyurethane resin aqueous dispersion (3) in Example 4), to produce a sheet-shaped article having ultrafine fibers with an average single-fiber diameter of 4.4 $\mu$m. The sheet-shaped article obtained had a flexible texture and favorable resilience. In addition, the crease recovery rate was satisfactory.

[Example 5]

The same procedure as in the Examples was repeated, except that the heat-sensitive coagulation temperature in Example 1 (while the polyurethane resin was imparted) was adjusted to 85°C, to produce a sheet-shaped article having ultrafine fibers with an average single-fiber diameter of 4.4 $\mu$m. The sheet-shaped article obtained had a flexible texture and favorable resilience. In addition, the crease recovery rate was satisfactory.

[Comparative Example 1]

The same procedure as in Example 1 was repeated, except that the polyurethane resin aqueous dispersion (4) was used in Example 1 (while the polyurethane resin was imparted), to produce a sheet-shaped article having ultrafine fibers with an average single-fiber diameter of 4.4 $\mu$m. The sheet-shaped article obtained had a rigid texture and gave a paper-like touch sensation. Besides, the crease recovery rate was low.

[Table 1]

| | | | Reference Example 1 | Reference Example 2 | Reference Example 3 | Reference Example 4 |
|---|---|---|---|---|---|---|
| Polycarbonate diol | Component 1 | (parts by mass) | 1,10-Decanediol: 140 | 1,10-Decanediol: 100 | 1,10-Decanediol: 200 | 1,6-Hexanediol: 200 |
| | Component 2 | (parts by mass) | 1,4-Butanediol: 60 | 1,4-Butanediol: 100 | | |
| Organic diisocyanate | | (parts by mass) | Hydrogenated MDI: 56 | Hydrogenated MDI: 56 | Hydrogenated MDI: 56 | Hydrogenated MDI: 56 |
| Chain extender | | (parts by mass) | EG: 9 | EG: 9 | EG: 9 | EG: 9 |
| Internal emulsifier | | (parts by mass) | DMPA: 5 | DMPA: 5 | DMPA: 5 | DMPA: 5 |

[Table 2]

| | Fiber diameter ($\mu$m) | Kind of polyurethane | Coagulation temperature: 65 (°C) | Texture (cm) | Resilience (grade) | Crease recovery rate (%) |
|---|---|---|---|---|---|---|
| Example 1 | 4.4 | (1) | 65 | 4.5 | 5 | 97 |

(continued)

| | Fiber diameter ($\mu$m ) | Kind of polyurethane | Coagulation temperature: 65 (°C) | Texture (cm) | Resilience (grade) | Crease recovery rate (%) |
|---|---|---|---|---|---|---|
| Example 2 | 3.0 | (1) | 65 | 4.3 | 4 | 97 |
| Example 3 | 4.4 | (2) | 65 | 4.8 | 5 | 99 |
| Example 4 | 4.4 | (3) | 65 | 3.6 | 4 | 89 |
| Example 5 | 4.4 | (1) | 85 | 6.0 | 4 | 80 |
| Comparative Example 1 | 4.4 | (4) | 65 | 9.5 | 1 | 34 |

Particular embodiments have been used to detail the invention. However, it is evident to those skilled in the art that various alternations and modifications are allowed without departing from the spirit and scope of the invention. Note that the present application is based on a Japanese Patent Application (JP2018-076570), filed on April 12, 2018, and a Japanese Patent Application (JP2018-076571), filed on the same date, which are herein incorporated by reference in the entirety.

INDUSTRIAL APPLICABILITY

Any sheet-shaped article of the invention can be fit for furniture, chairs and wall coverings, seats in cabins of vehicles such as cars, trains and aircrafts, skin materials for ceilings and interiors, interior materials with a very elegant appearance, and clothing and industrial materials, and so on.

**Claims**

1.  A sheet-shaped article comprising a polymer elastic body and a nonwoven fabric obtained from ultrafine fibers having an average single-fiber diameter of 0.1 to 10 $\mu$m,
    wherein the polymer elastic body is a polyurethane resin obtained using, as reaction components, the following: a polycarbonate diol containing a structural unit derived from a $C_{8-20}$ alkane diol; an organic diisocyanate; and a chain extender, and a bending and crease recovery rate of the sheet-shaped article is 80 to 100%.

2.  The sheet-shaped article according to claim 1, wherein the polyurethane resin further includes, as a reaction component, a polycarbonate diol containing a structural unit derived from a $C_{4-6}$ alkane diol.

3.  A method for producing a sheet-shaped article, comprising the steps of: imparting a water-dispersible polyurethane obtained by reacting a polycarbonate diol containing a structural unit derived from a $C_{8-20}$ alkane diol, an organic diisocyanate, and a chain extender to a fibrous substrate to which polyvinyl alcohol has been imparted at 0.1 mass% to 50 mass% per fiber mass and which has, as a main constituent, ultrafine fibers with an average single-fiber diameter of 0.1 $\mu$m to 10 $\mu$m; and then removing the polyvinyl alcohol from the fibrous substrate.

4.  The method for producing a sheet-shaped article according to claim 3, wherein the water-dispersible polyurethane is coagulated at a temperature of 55°C to 80°C.

5.  The method for producing a sheet-shaped article according to claim 3 or 4, wherein the polyvinyl alcohol has a saponification degree of 98% or higher.

6.  The method for producing a sheet-shaped article according to any one of claims 3 to 5, wherein the water-dispersible polyurethane further includes a heat-sensitive coagulant.

## INTERNATIONAL SEARCH REPORT

| International application No. |
| --- |
| PCT/JP2019/007200 |

A. CLASSIFICATION OF SUBJECT MATTER
Int. Cl. D06N3/14(2006.01)i, D06M15/564(2006.01)i

According to International Patent Classification (IPC) or to both national classification and IPC

B. FIELDS SEARCHED

Minimum documentation searched (classification system followed by classification symbols)
Int. Cl. D06N1/00-D06N7/06, D06M15/564, B32B1/00-B32B43/00

Documentation searched other than minimum documentation to the extent that such documents are included in the fields searched
Published examined utility model applications of Japan     1922-1996
Published unexamined utility model applications of Japan   1971-2019
Registered utility model specifications of Japan           1996-2019
Published registered utility model applications of Japan   1994-2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2008-106415 A (TORAY INDUSTRIES, INC.) 08 May 2008, claims, paragraphs [0013], [0027]-[0029], [0038]-[0045], [0051], [0052], [0072], [0073], [0078]-[0102], table 1 (Family: none) | 1-2 |
| X | JP 2013-112905 A (TORAY INDUSTRIES, INC.) 10 June 2013, claims, paragraphs [0001], [0009], [0015], [0023], [0031]-[0034], [0050], [0055], [0071]-[0105], tables 1, 2 (Family: none) | 1-2 |

☒ Further documents are listed in the continuation of Box C.     ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 16.05.2019 | 28.05.2019 |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2019/007200

C (Continuation).   DOCUMENTS CONSIDERED TO BE RELEVANT

| Category* | Citation of document, with indication, where appropriate, of the relevant passages | Relevant to claim No. |
|---|---|---|
| X | WO 2016/063761 A1 (TORAY INDUSTRIES, INC.) 28 April 2016, paragraphs [0009], [0028], [0029], [0034], [0036], [0040], [0142]-[0145], [0178], [0187], [0208]-[0261] & US 2017/0350069 A1, paragraphs [0008], [0029], [0030], [0035], [0038], [0041], [0145]-[0148], [0181], [0190], [0216]-[02269] & EP 3211132 A1 & CN 107002351 A | 3-6 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017119755 A
- WO 2014084253 A
- JP 4222719 B
- JP 56041652 B
- JP 4539634 B
- JP 4539635 B
- JP 2018076570 A
- JP 2018076571 A